# FASCICULE DE BREVET EUROPEEN

(11) **EP 1 248 498 B1**
(45) Date de publication et mention de la délivrance du brevet: **14.07.2004**
(21) Numéro de dépôt: 02290842.0
(22) Date de dépôt: 05.04.2002
(51) Int. Cl.: H05B 41/38, H05B 41/288, B60Q 1/14

(54) **Procédé et dispositif de la gestion de l'alimentation d'une lampe à décharge**
Verfahren und Gerät zum Betreiben einer Entladungslampe
Method and apparatus for operating a discharge lamp

(30) Priorité: 05.04.2001 FR 0104757
(43) Date de publication de la demande: 09.10.2002
(73) Titulaire: VALEO VISION, 93012 Bobigny Cédex (FR)
(72) Inventeur: Leleve, Joel, c/o Valeo Vision, 93012 Bobigny Cedex (FR)
(74) Mandataire: Kohn, Philippe

(56) Documents cités:
- EP-A- 0 459 126
- DE-A- 19 743 580
- US-A- 5 962 990

## Description

L'invention propose un procédé de gestion de l'alimentation d'une lampe à décharge d'un projecteur de véhicule automobile.

L'invention propose aussi un dispositif de gestion d'alimentation d'une lampe à décharge d'un projecteur de véhicule automobile.

Une lampe à décharge est constituée notamment par deux électrodes. L'émission d'un flux lumineux est due à la création d'un arc électrique de lumière entre les deux électrodes. Pour ce faire, il est nécessaire de créer une différence de potentiel importante entre les deux électrodes qui sont agencées dans une ampoule hermétique, et qui sont séparées l'une de l'autre d'une distance prédéterminée qui peut être par exemple 4 mm.

L'ampoule qui est généralement réalisée en verre, notamment en verre de quartz, et est remplie d'un gaz tel que du xénon à une pression élevée, de sels métalliques et d'halogénures à l'état solide.

L'arc électrique provoqué dans le xénon par l'action de la commande d'éclairage, fournit l'énergie nécessaire à l'évaporation des sels métalliques et des halogénures provoquant alors l'émission d'un flux de lumière.

La lampe à décharge est alimentée par un dispositif d'alimentation aussi appelé "ballast" qui réalise l'activation de la lampe et qui permet ensuite son fonctionnement en régime stabilisé à un point de fonctionnement déterminé par les caractéristiques de la lampe et de la prestation que celle-ci doit fournir.

L'activation de la lampe peut être décomposée en une phase d'amorçage et en une phase d'allumage ou de chauffe de la lampe au cours de laquelle le flux lumineux émis par la lampe augmente jusqu'à atteindre le point de fonctionnement prédéterminé de la lampe.

La phase d'amorçage est très courte. Elle permet la formation de l'arc électrique entre les deux électrodes.

Lors de la phase d'allumage, de façon connue, la lampe est alimentée par un premier courant prédéterminé qui permet, en une durée prédéterminée, au flux lumineux émis par la lampe d'atteindre le flux lumineux prédéterminé qui correspond au point de fonctionnement de la lampe.

La phase d'allumage permet aux électrodes ainsi qu'à d'autres constituants de la lampe, tels que le gaz contenu dans l'ampoule, de chauffer pour atteindre leur température de fonctionnement permettant un rendement et un flux lumineux optimums de la lampe.

Par exemple, pour que le flux lumineux de la lampe atteigne 80 % du flux prédéterminé en deux secondes, la lampe est alimentée par un courant d'alimentation de 2,6 Ampères.

Cela permet, lorsque l'utilisateur commande l'activation des lampes des projecteurs de son véhicule, que le flux lumineux fourni par ces dernières soit rapidement suffisant pour éclairer la route de façon satisfaisante.

Ensuite, lors du fonctionnement de la lampe en régime stabilisé, le courant d'alimentation de la lampe est diminué jusqu'à une valeur de l'ordre de 0,4 Ampère.

Cependant, le premier courant prédéterminé imposé lors de la phase d'allumage provoque un vieillissement accéléré de la lampe lié à l'évaporation des électrodes et aux contraintes mécaniques des constituants de la lampe, notamment dues à la brusque variation de la température

Par conséquent, la durée de vie de la lampe est fortement diminuée. En effet, une lampe à décharge qui équipe un véhicule dont les lampes des projecteurs ne sont allumées que la nuit a une durée de vie d'environ 3000 heures, alors que la même ampoule peut atteindre une durée de vie supérieure lorsque la fréquence d'allumage est inférieure, par exemple lorsque les lampes des projecteurs sont allumées dès que le véhicule démarre, c'est à dire même le jour.

De façon à minimiser le vieillissement des électrodes l'invention propose un procédé de gestion de l'alimentation d'une lampe à décharge d'un projecteur de véhicule automobile, caractérisé en ce que, lors de la phase d'allumage de la lampe à décharge, on pilote l'intensité du courant d'alimentation de la lampe en fonction d'un paramètre représentatif de l'environnement du véhicule pour optimiser la durée de vie de la lampe à décharge.

Selon d'autres caractéristiques de l'invention :
- on limite l'intensité du courant ou la puissance d'alimentation de la lampe à une valeur prédéterminée en fonction de la luminosité extérieure du véhicule ;
- le paramètre est représentatif de l'évolution future de la luminosité extérieure du véhicule.

L'invention propose aussi un dispositif de gestion de l'alimentation d'une lampe à décharge d'un projeteur de véhicule automobile qui comporte notamment un dispositif d'alimentation de la lampe à décharge qui pilote l'intensité du courant d'alimentation de la lampe à décharge selon le procédé du type décrit précédemment, caractérisé en ce qu'il comporte un dispositif de mesure de la luminosité extérieure du véhicule.

Selon encore d'autres caractéristiques de l'invention :
- le dispositif de mesure comporte un capteur de la luminosité extérieure ;
- le capteur de luminosité est prévu pour être agencé sur la face intérieure d'une paroi transparente, telle que le pare-brise du véhicule ou la glace du projecteur ;
- le dispositif de mesure comporte un système de cartographie qui fournit le paramètre représentatif de l'environnement du véhicule en fonction de la localisation du véhicule par rapport à des lieux prédéterminés tels qu'un tunnel.

D'autres caractéristiques et avantages de l'invention apparaîtront à la lecture de la description détaillée qui suit pour la compréhension de laquelle on se reportera aux dessins annexés dans lesquels :
- la figure 1 représente de façon schématique un dispositif d'alimentation d'une lampe à décharge ;
- la figure 2 est un diagramme qui illustre l'évolution du flux lumineux émis par une lampe à décharge en fonction du temps pour plusieurs intensités d'alimentation d'une lampe à décharge ;
- la figure 3 représente de façon schématique un dispositif de gestion de l'alimentation d'une lampe à décharge réalisée conformément à l'invention.

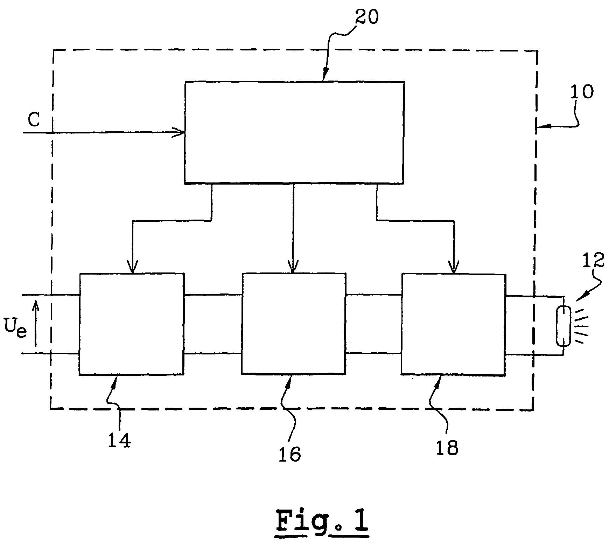

Comme on l'a représenté sur la figure 1, le dispositif d'alimentation 10 de la lampe à décharge 12 comporte, montés en série, un convertisseur 14 de tension continue en une autre tension continue, ou convertisseur continu/continu, un convertisseur 16 de tension continue en tension alternative, ou convertisseur continu/alternatif, et un étage d'amorçage 18 de la lampe 12 qui sont pilotés par une unité électronique de commande 20.

Le convertisseur continu/continu 14 est alimenté par la tension de la batterie du véhicule, ou tension d'entrée Uₑ, et il comprend par exemple un transformateur.

Le convertisseur continu/alternatif 16 comprend par exemple un pont en H de quatre interrupteurs (non représenté) à semi-conducteurs qui sont pilotés par l'unité électronique de commande 20.

Un étage d'amorçage 18 permet notamment de produire une impulsion haute tension au cours d'une phase dite d'amorçage de la lampe à décharge 12 qui précède une phase d'allumage aussi appelée phase de chauffe, puis une phase de fonctionnement en régime stabilisé.

Le dispositif d'alimentation 10 permet ainsi d'alimenter la lampe à décharge de façon à l'activer, c'est-à-dire pour initier l'arc électrique, puis d'augmenter le flux lumineux émis au cours de la phase d'allumage.

Cependant, tel que décrit précédemment, le courant d'alimentation de la lampe à décharge 12, pendant la phase d'allumage, est prédéterminé de façon à permettre l'augmentation du flux lumineux jusqu'au flux lumineux prédéterminé correspondant au point de fonctionnement prédéterminé de la lampe pendant une première durée prédéterminée.

Pendant la phase allumage, le dispositif d'alimentation 10 contrôle la puissance fournie à la lampe à décharge 12 avec un maximum de 75 watts et gère la transition vers la phase de fonctionnement en régime stabilisé à 35 watts. Durant cette phase, l'image de l'intensité du courant est la valeur la plus significative de la gestion de la puissance fournie à la lampe 12.

Pour cette raison dans la suite la description, seule la valeur de l'intensité du courant sera développée sachant que la proportionnalité avec la puissance lui est directement liée.

Dans la suite la description les valeurs d'intensité, ainsi que les temps indiqués, sont fournis à titre d'exemple pour un type de lampe 12 du type réglementaire D1 ou D2 dans des conditions d'utilisation déterminées.

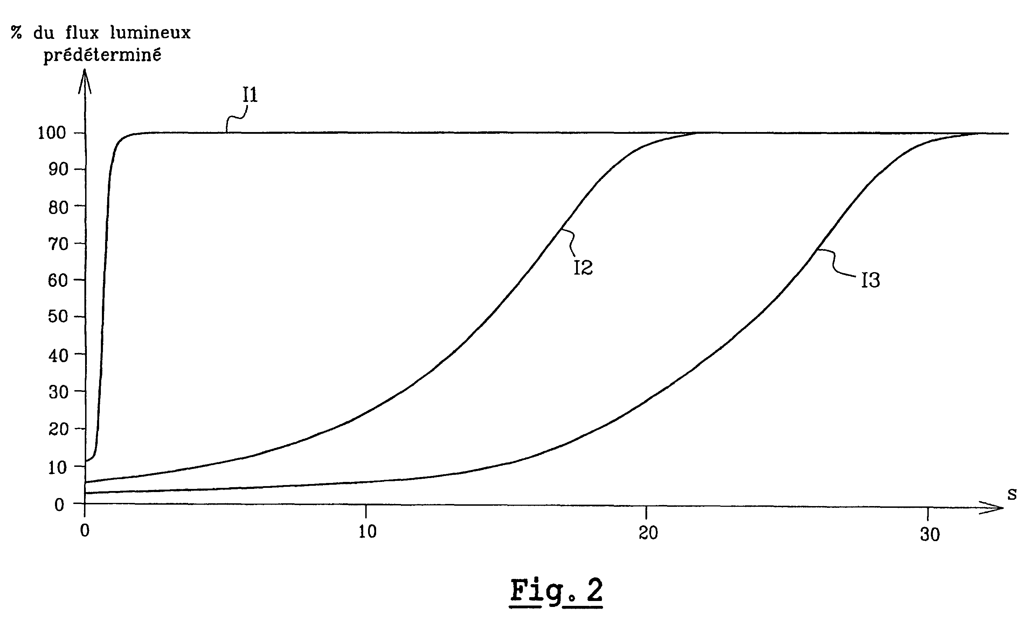

Conformément à la courbe I₁ de la figure 2 et de façon habituelle, la lampe 12 est alimentée par un courant d'une intensité de l'ordre de 2,6 Ampères. Ce courant d'alimentation permet une durée d'allumage courte, c'est-à-dire que le flux lumineux émis par la lampe 12 atteint plus de 80% du flux lumineux prédéterminé correspondant au point de fonctionnement de la lampe 12 quelques secondes après l'activation de la lampe 12. Une telle durée d'activation est satisfaisante vis-à-vis des normes en vigueur.

La valeur de 2,6 Ampères correspond à l'intensité maximale du courant d'alimentation autorisée par les normes actuelles pour véhicules qui circulent sur la voie publique.

Or, l'alimentation par un courant d'alimentation d'intensité de l'ordre de 2,6 Ampères pendant quelques secondes provoque un vieillissement accéléré des électrodes et diminue fortement la durée de vie de la lampe à décharge 12.

Chaque activation de la lampe à décharge 12, équivaut à environ 5 minutes de fonctionnement de la lampe 12 lorsqu'elle est dans la phase de fonctionnement en régime stabilisé.

Bien que dans certaines situations il soit nécessaire que le flux lumineux augmente rapidement pour permettre un éclairage efficace, notamment la nuit, il existe d'autres situations dans lesquelles l'augmentation du flux lumineux peut être beaucoup plus lente, notamment lors de l'activation des projecteurs le jour.

En effet, dans ce cas, la fonction des projecteurs n'est pas d'éclairer la route pour permettre au conducteur de la voir correctement, mais de permettre au véhicule d'être vu de plus loin par les utilisateurs d'autres véhicules. Ainsi, si l'augmentation du flux lumineux pour atteindre le flux prédéterminé de la phase de fonctionnement en régime stabilisé est longue, c'est-à-dire de plusieurs dizaines de secondes, cela n'a quasiment aucune incidence sur la sécurité.

De façon à minimiser le vieillissement des électrodes pour optimiser la durée de vie de la lampe à décharge 12, l'invention propose un procédé de gestion de l'alimentation de la lampe 12 qui pilote l'intensité du courant ou la puissance d'alimentation de la lampe à décharge 12 en fonction d'un paramètre représentatif de l'environnement du véhicule, lors de la phase d'allumage de la lampe 12 à décharge.

Ainsi, lorsque le véhicule est dans un environnement qui nécessite une augmentation rapide du flux lumineux fourni par la lampe à décharge 12, l'intensité du courant d'alimentation de la lampe est pilotée à une valeur maximale prédéterminée qui peut être de l'ordre de 2,6 Ampères.

À l'inverse, lorsque le véhicule évolue dans un environnement qui ne nécessite pas une augmentation rapide du flux lumineux, la puissance fourni à la lampe 12 ou l'intensité de son courant d'alimentation sont pilotées à d'autres valeurs prédéterminées qui peuvent être de l'ordre de quelques dixièmes d'Ampère pour l'intensité du courant et d'environ 40 watts pour la puissance maximale.

La figure 2 représente deux autres exemples d'évolution du flux lumineux pour deux intensités d'alimentation différentes.

La courbe I₂ est obtenue pour une intensité du courant d'alimentation de la lampe 12 de 0,9 Ampère. Dans ce cas le flux émis par la lampe 12 atteint 100% du flux prédéterminé après une durée de l'ordre de 20 secondes.

La courbe I₃ est obtenue par une intensité du courant d'alimentation de la lampe 12 de 0,6 Ampère. Dans ce cas, le flux émis par la lampe 12 atteint 100% du flux prédéterminé après une durée de l'ordre de 30 secondes.

Ainsi, lors de l'activation de la lampe à décharge 12 selon la courbe I₃, le vieillissement des électrodes et la fatigue mécanique des constituants de la lampe 12 sont fortement diminués par rapport au vieillissement lors d'une activation de la lampe 12 selon la courbe I₁. À chaque fois que la lampe 12 est activée selon la courbe I₃, la durée de vie de la lampe 12 est augmentée de plusieurs minutes par rapport à l'état de la technique dans lequel la lampe 12 est toujours activée selon la courbe I₁.

Selon l'invention, pour chaque valeur du paramètre représentatif de l'environnement du véhicule, il correspond une intensité prédéterminée du courant d'alimentation et une puissance maximale qui permettent de fournir un compromis entre la vitesse de l'augmentation de l'intensité du flux lumineux et l'accélération du vieillissement des électrodes en fonction de l'environnement du véhicule.

La durée de vie de la lampe 12 est alors fortement augmentée. L'invention permet dans des cas très particuliers qui se produisent rarement de permettre une augmentation encore plus rapide du flux lumineux émis que lorsque la lampe 12 est alimentée par une intensité de 2,6 Ampères. Il s'agit notamment de la traversée d'un tunnel.

En effet, dans ce cas, le véhicule passe très rapidement d'une situation dans laquelle l'allumage des lampes à décharge 12 peut être lent à une situation dans laquelle l'allumage doit être rapide. De plus, le véhicule est alors susceptible de rouler à une vitesse élevée qui nécessite une vision parfaite de la route. Or, la durée d'allumage représentée par la courbe I₁ peut se révéler trop longue.

L'invention permet de piloter l'intensité du courant d'alimentation à une valeur supérieure à 2,6 Ampères pour diminuer la durée d'allumage. Toutefois l'intensité du courant d'alimentation ne doit pas dépasser une valeur prédéterminée qui provoquerait la détérioration totale des électrodes.

La diminution de la durée de vie de la lampe à décharge 12 pour un allumage de ce type est supérieure à la diminution de la durée de vie pour un allumage avec un courant de 2,6 Ampères. Cependant, la durée de vie globale de la lampe à décharge 12 n'est quasiment pas affectée, ce type de situation étant très rare par rapport au nombre total d'allumage de la lampe 12 au cours de sa vie.

Un allumage de ce type permet ainsi d'augmenter le confort de conduite, ainsi que la sécurité, sans diminuer de façon importante la durée de vie globale de la lampe 12.

Bien entendu actuellement les normes en vigueur limitent la valeur de l'intensité du courant d'alimentation des véhicules qui circulent sur la voie publique à 2,6 Ampères. Le dépassement de cette valeur peut aujourd'hui être envisagé pour des véhicules qui ne circulent pas sur la voie publique tels que des engins de chantiers ou des véhicules forestiers.

Il faut retenir que l'invention propose, dans des cas particuliers, de réduire légèrement la durée de vie des lampes 12 pour permettre d'augmenter le confort de conduite et la sécurité des usagers. Pour cela, l'intensité du courant d'alimentation peut être temporairement supérieure à l'intensité du courant d'alimentation des lampes 12 lors d'une activation dans une situation courante, telle qu'une activation la nuit lors du démarrage du véhicule.

Le paramètre représentatif de l'environnement du véhicule peut être représentatif de la luminosité extérieure du véhicule. Dans ce cas, la valeur du paramètre peut être proportionnelle à la luminosité extérieure.

Ainsi, si le conducteur active les projecteurs de son véhicule lorsqu'il roule à la tombée de la nuit, la valeur du paramètre représentatif de la luminosité extérieure a une valeur moyenne. L'intensité du courant d'alimentation de la lampe à décharge 12 peut être pilotée à une valeur moyenne qui peut par exemple être de 0,9 Ampère. Dans ce cas, le flux lumineux émis par la lampe 12 augmente de façon à atteindre la valeur du flux prédéterminé en une durée moyenne qui peut être de l'ordre d'une vingtaine de secondes, conformément à la courbe I₂.

Si le conducteur active les projecteurs du véhicule alors qu'il fait totalement nuit, le flux lumineux émis par la lampe doit augmenter rapidement de façon à atteindre la valeur du flux prédéterminé en une durée plus courte.

Pour ce faire, le procédé de gestion de l'alimentation de la lampe 12 pilote l'intensité du courant d'alimentation à une valeur plus élevée que la précédente qui peut par exemple être de 2,6 Ampères. Dans ce cas, le flux émis par la lampe 12 atteint la valeur du flux prédéterminé dans un temps court qui peut être de l'ordre de 2 à 3 secondes, conformément à la courbe I₁.

De façon similaire lorsque le conducteur active des projecteurs du véhicule lorsqu'il fait jour, le procédé de gestion de l'alimentation pilote l'intensité du courant d'alimentation de la lampe à une valeur qui peut être de l'ordre de quelques dixièmes d'Ampère. Dans ce cas, le flux lumineux peut mettre plusieurs dizaines de secondes pour atteindre le flux prédéterminé.

Le paramètre représentatif de l'environnement peut aussi être représentatif de l'évolution future de la luminosité extérieure du véhicule. Dans ce cas, le paramètre représentatif permet d'anticiper l'évolution de la luminosité extérieure de façon à optimiser la durée de vie de la lampe à décharge.

L'anticipation de l'évolution de la luminosité extérieure est très avantageuse dans le cas d'une brusque variation de la luminosité extérieure.

Par exemple, lorsque le véhicule entre dans un tunnel, la luminosité extérieure du véhicule chute très brutalement. Si l'activation des lampes 12 des projecteurs du véhicule est initiée avant l'entrée du tunnel, la luminosité extérieure du véhicule est élevée de façon que, si le paramètre pris en compte pour le pilotage de l'intensité du courant d'alimentation n'anticipe pas l'évolution de la luminosité extérieure, le procédé de gestion va piloter l'intensité du courant d'alimentation de la lampe à une valeur faible qui peut être de l'ordre de quelques dixièmes d'Ampère.

Lors de l'entrée du véhicule dans le tunnel, si le conducteur n'a pas activé ses projecteurs depuis plusieurs dizaines de secondes, l'intensité du flux lumineux émis par la lampe à décharge 12 va être insuffisante pour assurer un éclairage satisfaisant de la route. Cela peut augmenter le risque d'accident.

Lorsque le paramètre représentatif de l'environnement est représentatif de l'évolution future de la luminosité extérieure du véhicule, elle permet de prévoir la présence du tunnel.

Par conséquent le pilotage de l'intensité du courant d'alimentation de la lampe à décharge 12 ne sera pas réalisé en fonction de la luminosité extérieure du véhicule lors de l'activation de la lampe 12, mais plutôt en fonction de la présence du tunnel. Ainsi, bien que la luminosité externe du véhicule soit forte, l'intensité du courant d'alimentation de la lampe 12 va être pilotée à une valeur qui sera avantageusement déterminée en fonction de la distance entre le véhicule et le tunnel, et la vitesse du véhicule, c'est-à-dire en fonction de la durée prévue entre l'activation des lampes 12 et l'entrée du véhicule dans le tunnel. Si cette durée est de l'ordre de quelques dizaines de secondes, l'intensité peut être de 0,6 Ampère. Si cette durée est de l'ordre de quelques secondes, l'intensité peut être de 2,6 Ampères.

Selon l'invention, le procédé peut aussi piloter l'intensité du courant d'alimentation de la lampe à décharge 12 en fonction de la température de ses électrodes. En effet, il est connu que la vitesse d'augmentation, du flux lumineux dépend de l'intensité du courant d'alimentation mais aussi de la température des électrodes. Plus la température des électrodes est proche de sa température de fonctionnement, plus l'intensité du courant d'alimentation peut être faible pour une vitesse constante d'augmentation du flux lumineux.

La température des électrodes peut être estimée, par exemple en fonction de l'intensité du courant d'allumage de la lampe à décharge 12.

De façon à simplifier la gestion de l'alimentation, notamment de l'unité électronique de commande 20, le pilotage de l'intensité du courant d'alimentation peut consister à limiter l'intensité à une valeur prédéterminée en fonction du paramètre représentatif de l'environnement.

Le pilotage de l'intensité du courant d'alimentation des lampes à décharge 12 des projecteurs d'un véhicule automobile en fonction du paramètre représentatif de l'environnement du véhicule peut être réalisé de façon continue. C'est-à-dire que pour chaque valeur du paramètre représentatif, il correspond une valeur d'intensité du courant d'alimentation.

Selon une variante, le pilotage de l'intensité du courant d'alimentation des lampes 12 peut être réalisé par plages. Dans ce cas, la gamme de variation de la valeur du paramètre est divisée en plusieurs plages. A chaque plage correspond une valeur d'intensité du courant d'alimentation.

Par exemple, il est possible de déterminer trois plages de valeurs du paramètre qui correspondent à la luminosité du jour, de la tombée de la nuit et de la nuit respectivement. À chacune de ces plages correspond une intensité du courant d'alimentation. Selon cet exemple, les trois intensités d'alimentation peuvent correspondre à 0,6, 0,9 et 2,6 Ampères respectivement conformément à la figure 2.

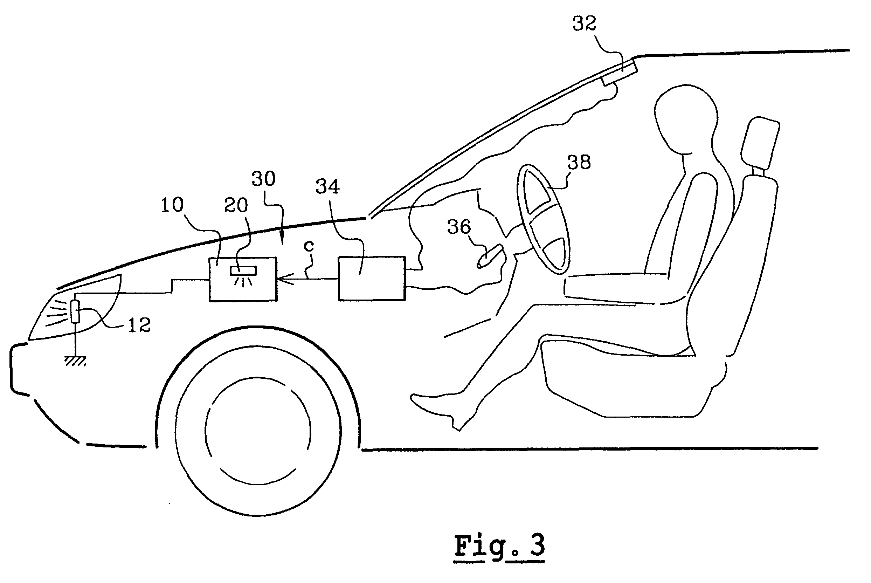

L'invention propose aussi un dispositif de gestion 30 de l'alimentation de la lampe à décharge 12 représenté de façon schématique à la figure 3.

Le dispositif de gestion 30 comporte le dispositif 10 d'alimentation de la lampe à décharge 12 qui est relié à un dispositif de mesure 32 par l'intermédiaire d'un module de commande 34.

Le dispositif de mesure 32 fournit un paramètre qui est représentatif de l'environnement du véhicule. Le paramètre est fourni par le dispositif de mesure 32 sous forme d'un signal électrique.

Le module de commande 34 permet de traiter le signal électrique de façon à fournir à l'unité électronique de commande 20 une instruction de commande C.

Le dispositif de gestion 30 peut fonctionner selon un mode manuel ou un mode automatique.

En mode manuel, c'est le conducteur du véhicule qui détermine l'instant d'activation des lampes à décharge 12 des projecteurs du véhicule. L'activation des lampes 12 est généralement obtenue par l'actionnement d'un levier de commande 36 situé à proximité du volant de direction 38 du véhicule. Lorsque le conducteur active les lampes 12, l'instruction de commande C est fournie à l'unité électronique de commande 20 de façon à piloter l'intensité du courant d'alimentation ou la puissance maximale fournie aux lampes 12 pour optimiser leur durée de vie.

Selon une variante, l'activation des lampes peut être obtenue par un dispositif de reconnaissance vocale commandé par la voix du conducteur.

En mode automatique, aucune intervention du conducteur n'est nécessaire pour déterminer l'instant d'activation des lampes 12.

Lorsque la valeur du paramètre représentatif de l'environnement du véhicule atteint une valeur de seuil prédéterminée qui correspond à une luminosité extérieure du véhicule nécessitant l'éclairage de la route par les projecteurs, le module de commande 34 fournit à l'unité de commande électronique 20 l'instruction de commande C de façon à piloter l'intensité du courant d'alimentation des lampes 12 ou leur puissance pour optimiser leur durée de vie.

Il est possible de prévoir que, lorsque le dispositif de gestion 30 fonctionne en mode automatique, la détermination manuelle de l'instant d'activation des lampes 12 par le conducteur est prioritaire. Cela permet au conducteur d'anticiper l'activation des lampes 12 de façon à prendre en compte certaines informations de l'environnement du véhicule qui ne sont pas prises en comptes par le paramètre représentatif de l'environnement du véhicule.

Par exemple, lorsque le paramètre représentatif de l'évolution de la luminosité extérieure du véhicule ne prend pas en compte l'évolution future de cette luminosité, le conducteur du véhicule peut anticiper l'activation des lampes 12 lorsqu'il s'approche de l'entrée dans un tunnel.

La sélection entre les modes de fonctionnement manuel et automatique peut être faite par l'actionnement d'un commutateur "manuel/automatique" (non représenté) par le conducteur du véhicule.

Conformément à la figure 3, le dispositif de mesure 32 peut comporter un capteur de la luminosité extérieure.

Le capteur de luminosité peut être agencé sur la face intérieure du pare-brise du véhicule ou de la glace d'un projecteur.

Certains véhicules sont équipés d'un capteur de pluie qui permet de déclencher et/ou de piloter la vitesse de balayage du dispositif d'essuyage en fonction de l'intensité de la pluie.

De façon à limiter le coût du dispositif de gestion 30, il est possible de coupler le capteur de luminosité avec un tel détecteur de pluie.

Le dispositif de mesure 32 peut comporter une horloge qui fournit le paramètre représentatif de l'environnement du véhicule en fonction de l'heure.

Par exemple, l'horloge est programmée de façon à faire correspondre un paramètre représentatif de la luminosité extérieure du véhicule à chaque instant de l'année pour une région ou un pays déterminé.

Ainsi, en fonction de l'heure à laquelle les lampes à décharge 12 sont activées, l'horloge permet de déterminer la luminosité extérieure du véhicule de façon à fournir au module de commande 34 le paramètre représentatif de l'environnement du véhicule.

Par exemple en France, lorsque le conducteur active les lampes 12 le 24 décembre à minuit, le paramètre fourni par le dispositif de mesure 32 est représentatif d'une lumière très faible. L'horloge permet en effet de déterminer que, à cet instant, il fait nuit.

Lorsque le dispositif de gestion 30 fonctionne en mode automatique, le dispositif de mesure 32 qui comporte une horloge peut permettre de déterminer l'instant d'activation des lampes 12. En fonction du jour de l'année, ainsi que de la situation du véhicule sur le globe terrestre, le dispositif de mesure 32 permet de déterminer l'instant auquel la luminosité extérieure n'est plus suffisante et nécessite l'activation des lampes 12 pour éclairer la route et/ou être vu correctement par les conducteurs d'autres véhicules.

L'utilisateur du véhicule peut avoir besoin d'éclairage alors que l'horaire correspond à une période de jour, c'est notamment le cas lorsqu'il se trouve dans un parking couvert. Dans cette éventualité, l'activation manuelle des lampes 12 du véhicule doit être prioritaire sur l'activation des lampes 12 en mode automatique.

Le dispositif de mesure 32 peut aussi comporter un système de cartographie qui fournit le paramètre représentatif de l'environnement du véhicule en fonction de la localisation du véhicule.

Le système de cartographie peut permettre par divers moyens de localiser avec précision la position du véhicule sur le réseau routier.

Un tel dispositif de mesure 32 est avantageusement utilisé pour les pays dans lesquels l'allumage des lampes 12 des projecteurs le jour n'est pas obligatoire.

Lors de la circulation du véhicule, il peut arriver qu'il traverse des zones dans lesquelles la luminosité est beaucoup plus faible que la luminosité extérieure, qui nécessitent l'éclairage de la route par les projecteurs du véhicule. Il s'agit notamment des tunnels. Dans ce cas il est avantageux de prévoir la présence de telles zones de façon à adapter le pilotage de l'intensité du courant d'alimentation des lampes à décharge 12 en fonction de la situation.

En mode automatique, le dispositif de mesure 32 qui comporte un système de cartographie permet notamment d'anticiper l'activation des lampes 12 en fonction de la vitesse du véhicule et de sa localisation par rapport aux tunnels de façon que lorsque le véhicule pénètre à l'intérieur d'un tunnel l'intensité du flux lumineux émis par les lampes 12 soit suffisant. L'anticipation de l'activation des lampes 12 permet notamment de piloter l'intensité du courant d'alimentation des lampes 12 à une valeur faible de façon à limiter le vieillissement des électrodes et optimiser la durée de vie des lampes à décharge 12.

## Revendications

1. Procédé de gestion de l'alimentation d'une lampe (12) à décharge d'un projecteur de véhicule automobile, **caractérisé en ce que**, lors de la phase d'allumage de la lampe (12) à décharge, on pilote l'intensité du courant ou la puissance d'alimentation de la lampe (12) en fonction d'un paramètre représentatif de la luminosité extérieure du véhicule pour optimiser la durée de vie de la lampe (12) à décharge.

2. Procédé de gestion selon la revendication précédente, **caractérisé en ce qu**'on limite l'intensité du courant ou la puissance d'alimentation de la lampe (12) à une valeur prédéterminée en fonction de la luminosité extérieure du véhicule.

3. Procédé de gestion selon l'une quelconque des revendications précédentes, **caractérisé en ce que** le paramètre est représentatif de l'évolution future de la luminosité extérieure du véhicule.

4. Dispositif de gestion (30) de l'alimentation d'une lampe (12) à décharge d'un projeteur de véhicule automobile qui comporte notamment un dispositif d'alimentation (10) de la lampe (12) à décharge qui pilote l'intensité du courant d'alimentation de la lampe (12) à décharge selon le procédé selon l'une quelconque des revendications précédentes, **caractérisé en ce qu'**il comporte un dispositif de mesure (32) de la luminosité extérieure du véhicule.

5. Dispositif de gestion (30) selon la revendication précédente, **caractérisé en ce que** le dispositif de mesure (32) comporte un capteur de la luminosité extérieure.

6. Dispositif de gestion (30) selon la revendication précédente, **caractérisé en ce que** le capteur de luminosité est prévu pour être agencé sur la face intérieure d'une paroi transparente, telle que le pare-brise du véhicule ou la glace du projecteur.

7. Dispositif de gestion (30) selon l'une quelconque des revendications 4 à 6, **caractérisé en ce que** le dispositif de mesure (32) comporte un système de cartographie qui fournit le paramètre représentatif de la luminosité extérieure du véhicule en fonction de la localisation du véhicule par rapport à des lieux prédéterminés tels qu'un tunnel.

## Patentansprüche

1. Verfahren zum Steuern der Stromversorgung einer Gasentladungslampe (12) eines Kraftfahrzeugscheinwerfers,
**dadurch gekennzeichnet, dass** die Stromstärke oder die Leistung der Stromversorgung der Lampe (12) während der Zündphase der Gasentladungslampe (12) in Abhängigkeit eines für die Helligkeit außerhalb des Fahrzeugs repräsentativen Parameters gesteuert wird, um die Lebensdauer der Gasentladungslampe (12) zu optimieren.

2. Steuerungsverfahren nach dem vorhergehenden Anspruch,
**dadurch gekennzeichnet, dass** die Stromstärke oder die Leistung der Stromversorgung der Lampe (12) auf einen in Abhängigkeit der Helligkeit außerhalb des Fahrzeug vorbestimmten Wert begrenzt wird.

3. Steuerungsverfahren nach einem der vorhergehenden Ansprüche,
**dadurch gekennzeichnet, dass** der Parameter für die weitere Entwicklung der Helligkeit außerhalb des Fahrzeugs repräsentativ ist.

4. Vorrichtung (30) zum Steuern der Stromversorgung einer Gasentladungslampe (12) eines Kraftfahrzeugscheinwerfers, die insbesondere eine Stromversorgungseinrichtung (10) der Gasentladungslampe (12) umfasst, die die Stärke des Speisestroms der Gasentladungslampe (12) nach einem der vorhergehenden Ansprüche steuert,
**dadurch gekennzeichnet, dass** sie eine Vorrichtung (32) zum Messen der Helligkeit außerhalb des Fahrzeugs umfasst.

5. Steuerungsvorrichtung (30) nach dem vorhergehenden Anspruch,
**dadurch gekennzeichnet, dass** die Messvorrichtung (32) einen Sensor zum Erfassen der Außenhelligkeit umfasst.

6. Steuerungsvorrichtung (30) nach dem vorhergehenden Anspruch,
**dadurch gekennzeichnet, dass** der Helligkeitssensor zur Anbringung an der Innenseite einer durchsichtigen Wand vorgesehen ist, etwa der Windschutzscheibe des Fahrzeugs oder der Scheibe des Scheinwerfers.

7. Steuerungsvorrichtung (30) nach einem der Ansprüche 4 bis 6,
**dadurch gekennzeichnet, dass** die Messvorrichtung (32) ein Kartographiesystem umfasst, das den für die Helligkeit außerhalb des Fahrzeugs repräsentativen Parameter in Abhängigkeit des Standorts des Fahrzeugs in Bezug auf vorbestimmte Örtlichkeiten wie einen Tunnel liefert.

## Claims

1. Method of managing the supply to a discharge lamp (12) of a motor vehicle headlight, **characterized in that**, during the phase of starting up the discharge lamp (12), the strength of the current or the power supplied to the lamp (12) is controlled on the basis of a parameter representative of the brightness outside the vehicle so as to optimize the life of the discharge lamp (12).

2. Management method according to the preceding claim, **characterized in that** the strength of the current or the power supplied to the lamp (12) is limited to a value which is predetermined on the basis of the brightness outside the vehicle.

3. Management method according to any one of the preceding claims, **characterized in that** the parameter is representative of the future change in brightness outside the vehicle.

4. Device (30) for managing the supply to a discharge lamp (12) of a motor vehicle headlight, which comprises in particular a device (10) for supplying the discharge lamp (12) which controls the strength of the current supplied to the discharge lamp (12) according to the method according to any one of the preceding claims, **characterized in that** it comprises a device (32) for measuring the brightness outside the vehicle.

5. Management device (30) according to the preceding claim, **characterized in that** the measurement device (32) comprises an external-brightness sensor.

6. Management device (30) according to the preceding claim, **characterized in that** the brightness sensor is designed to be arranged on the inside of a transparent wall, such as the windscreen of the vehicle or the headlight glass.

7. Management device (30) according to any one of Claims 4 to 6, **characterized in that** the measurement device (32) comprises a mapping system which provides the parameter representative of the brightness outside the vehicle on the basis of the location of the vehicle with respect to predetermined places such as a tunnel.
